Europäisches Patentamt

European Patent Office

Office européen des brevets

(11) Publication number: **0 215 578**
**B1**

(12) **EUROPEAN PATENT SPECIFICATION**

(45) Date of publication of patent specification: **22.11.90**

(21) Application number: **86306324.4**

(22) Date of filing: **15.08.86**

(51) Int. Cl.⁵: **A 23 K 1/22, A 23 K 1/12**

(54) Treatment of lignocellulosic materials.

(30) Priority: **17.08.85 GB 8520670**
**27.01.86 GB 8601941**

(43) Date of publication of application:
**25.03.87 Bulletin 87/13**

(45) Publication of the grant of the patent:
**22.11.90 Bulletin 90/47**

(84) Designated Contracting States:
**AT BE DE FR IT NL SE**

(56) References cited:
**EP-A-0 144 930**
**DE-A-2 756 564**
**GB-A-2 082 039**
**GB-A-2 124 066**
**GB-A-2 141 316**

(73) Proprietor: **BROTHERTON CHEMICALS LIMITED**
**Calder Vale Road**
**Wakefield West Yorkshire, WF1 5PH (GB)**
(73) Proprietor: **THE AFRC INSTITUTE OF**
**GRASSLAND AND ENVIRONMENTAL**
**RESEARCH**
**Hurley**
**Maidenhead Berkshire SL6 5LR (GB)**

(72) Inventor: **Mason, Victor Campbell**
**13 Nicholas Road**
**Henley on Thames Oxfordshire RG9 1RB (GB)**

(74) Representative: **Orr, William McLean et al**
**URQUHART-DYKES & LORD 5th Floor, Tower**
**House Merrion Way**
**Leeds West Yorkshire, LS2 8PA (GB)**

Courier Press, Leamington Spa, England.

# Description

This invention relates to processes for treating lignocellulosic materials such as straws, hays, whole crop cereals, grains or other harvested crops to raise the nitrogen content of the crop or modify and restrict microbial activity on the crop. With mature materials, containing 60% dry matter or more, the processes may also improve the digestibility of plant cell wall material.

It is known that the feed value of lignocellulosic plant materials, especially to ruminant animals, can be preserved or improved by treating the material with ammonia. In all situations the addition of ammonia raises the non-protein nitrogen content of the forage, which with low nitrogen feeds may be beneficial to the activities of silage and rumen microbes. Added ammonia has also important preservation properties, controlling the degradation of mature plant materials containing 60% or more of dry matter, under both aerobic and anaerobic conditions. With similar crop materials, added ammonia may also encourage alkaline conditions conducive to the breaking of bonds between aromatic and hemicellulosic compounds within the plant cell walls, thereby increasing the potential digestibility of plant organic matter in the ruminant.

An example of the use of ammonia as a source of supplementary non-protein nitrogen is available in regions where the maize crop is economically important. In this situation anhydrous ammonia is often added to the maize crop just prior to ensilage in the form of a super-cooled liquid (USS cold-flo system).

Likewise, several scientific publications describe the use of anhydrous ammonia or urea to preserve moist hay or grains, ammonia having been shown to restrict the growth of bacteria, yeasts and moulds, reduce actinomycete counts and detoxify aflotoxin.

Various processes have been proposed for upgrading straws with ammonia. Recently published specifications include GB 2082039, GB 2094127, GB 2122864, US 4064276 and US 4450178, in all of which the source of ammonia is anhydrous ammonia, typically maintained under pressure in a tank. GB 2124066 discloses a process in which the source of ammonia is an aqueous solution of ammonia. This Patent also refers to the use of an ammonium salt in the dry state or in aqueous solution but no examples of suitable salts are given. Furthermore, this published specification requires a complex apparatus in order to liberate the ammonia gas from the source of ammonia and pipe it to the crop.

EP—A—144930 discloses a process for increasing the food value of a cellulose-containing matter in which an ammonium salt is heated in order to produce ammonia. Ths ammonium salt is of an acid of a kind not leaving or forming noxious products in the said matter, and the mixture of gaseous ammonia, any other gaseous substance and water produced by heating said ammonium salt is brought into contact with the said cellulose-containing matter before substantial recombination has occurred.

The problems with the use of anhydrous ammonia under pressure or aqueous ammonia include the expense of these materials and the difficulty in handling them. Skilled personnel are required to carry out the process, and in particular to handle the dangerous and toxic materials. Furthermore, special equipment such as pressurised vessels is required. The present invention seeks to provide simple, safe and economic processes for adding ammonia to crops as a source of supplementary nitrogen, for preservation and for upgrading, allowing the use of methods which do not require skilled personnel and/or specialised equipment. Unlike the case with urea, the invention does not require microbial activity or the addition of urease to liberate the ammonia. Consequently ammonia release is more rapid than it is with urea.

According to the present invention there is provided a process for treating moist lignocellulosic crop materials, such as forage crops and grains, with ammonia released from an ammonium salt which is unstable or volatile at ambient temperature, in which the said salt is maintained in proximity with said material at ambient temperature, whereby said salt limits and controls microbial activity within said crop while gradually releasing ammonia.

The salt employed should be unstable or volatile in the absence or presence of moisture so that it decomposes slowly liberating ammonia gas. Particularly preferred salts are those produced by reaction of ammonia and carbon dioxide, with or without water. Such salts include ammonium carbonate, ammonium bicarbonate, ammonium carbamate and mixtures of these. For preservation purposes a preferred mixture is that known as "smelling salts", which corresponds approximately to a mixture of ammonium bicarbonate and ammonium carbamate and is formed from a mixture containing approximately 56% carbon dioxide and 32% ammonia, by weight, the remainder being water. It has been found that such a mixture slowly releases ammonia at ambient temperatures, particularly in the presence of water. The ultimate products are ammonia, carbon dioxide and water. For purposes of nitrogen supplementation the preferred salt is the more stable, relatively cheap ammonium bicarbonate, but other components of smelling salts are also suitable. The preferred salt for preservation or upgrading is ammonium carbamate, though bicarbonate or carbonate can also be used.

The chosen salt or mixture may be simply mixed with the crop, for example through a forage harvester, at or prior to ensiling in the case of maize or other ensiled material. Alternatively, the salt or mixture may be added at baling or be sprinkled between small bales or onto loose material at stacking in the case of hay, straw, whole crop cereal, or other plant material.

Because of the volatility of ammonia, treated material should be stored in an airtight container or under sealed plastic sheeting prior to further processing. However, with plant materials containing 60% dry matter or more the preservation aspects of the invention are less sensitive to minor air-leaks than are conventional acid-silage processes.

The ammonium salt will usually be applied in solid (powder) form, but there may be some instances in which it may be applied in solution.

In one embodiment the invention provides a means of adding supplementary nitrogen to a nitrogen-deficient crop or feed, such as maize silage, ensiled grass straws, cereal straws, whole crop small grain cereals, grain or other starchy or fibrous feed intended for ruminant feeding. In this embodiment the ammonium salt or mixture is added at a rate of about 0.5—1.5% ammonia-equivalent by weight of dry matter, applied at or just prior to ensilage or at feeding. The actual rate of application is determined by the nitrogen content of the original untreated crop or feed.

In a second embodiment the invention is concerned with the limitation and control of microbial activity during the anaerobic or aerobic storage of crops of straw, hay, whole crop cereal or grain containing up to about 40% moisture. For this purpose the ammonium salt or mixture is added at a minimum rate of about 2% ammonia-equivalent, by weight of plant dry matter, applied at or just prior to storage. The liberated ammonia conserves the crop prior to further processing and, depending on the type and amount of the ammonium salt used, the ambient temperature and the moisture content of the crop, the period for safe storage under aerobic conditions can be increased from a few days to several weeks. Previously, moist crops have been stored anaerobically by ensilage or dried for aerobic storage, the nutritive value decreasing during storage as a result of microbial fermentation or aerobic deterioration. The present invention restricts the anaerobic fermentation of mature crops and also suppresses aerobic deterioration for a protracted period, the length of which is influenced by the rate of ammonia loss and other conditions. When used in association with a drying process the invention can be adapted to control microbial growth until the crop is dry enough for safe storage.

A third embodiment of the invention is concerned with the upgrading of mature graminaceous crops containing 60% dry matter or more. The efficiency with which the liberated ammonia improves plant cell wall digestibility will depend on the pH achieved in the crop, this in turn depending on the type and amount of the ammonium salt used, the moisture content of the crop, ambient temperatures and other features of the storage conditions. In most situations best results are likely using ammonium carbamate, and when the ammonium salts are used at a rate of about 3.5% ammonia-equivalent. However, where upgrading is the primary objective of the treatment ammonium salts are best used in conjunction with strong alkalis, according to principles described in GB—A—2175788 (Patent Application No. 8525272).

An advantage of the use of the volatile ammonium salts is that they keep reasonably well in sealed packages, and therefore shelf life, storage and transport present no problem. There is no requirement for expensive pressure vessels. Since they are solids, the salts can be applied evenly and accurately to the crop using simple equipment, even when the moisture content of the crop is high. The amount of chemical applied is determined by the principal objective of the treatment, nitrogen content, preservation potential and crop digestibility being affected simultaneously by the processes of this invention. If desired, the ammonium salts may be used in conjunction with compounds such as urea, which, once degraded, have similar properties.

The use of ammonium "carbonate" (ie smelling salts in mixture of ammonium carbamate and bicarbonate) for the limitation and control of microbial activity in stored hay will now be described, by way of example only, and compared with storage of untreated hay and of hay treated with urea.

After treatment, the crop can be stored within, or under an impermeable layer, so that liberated gaseous ammonia can migrate through and be maintained in contact with the stored crop.

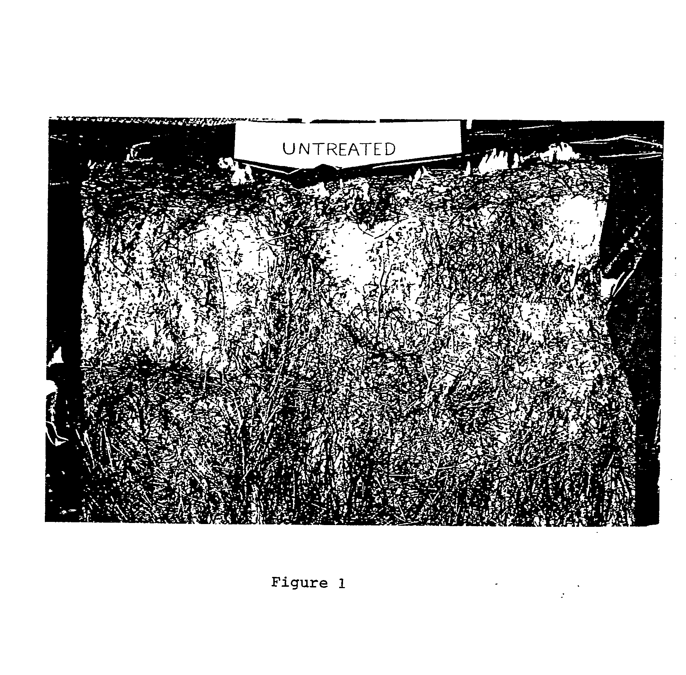

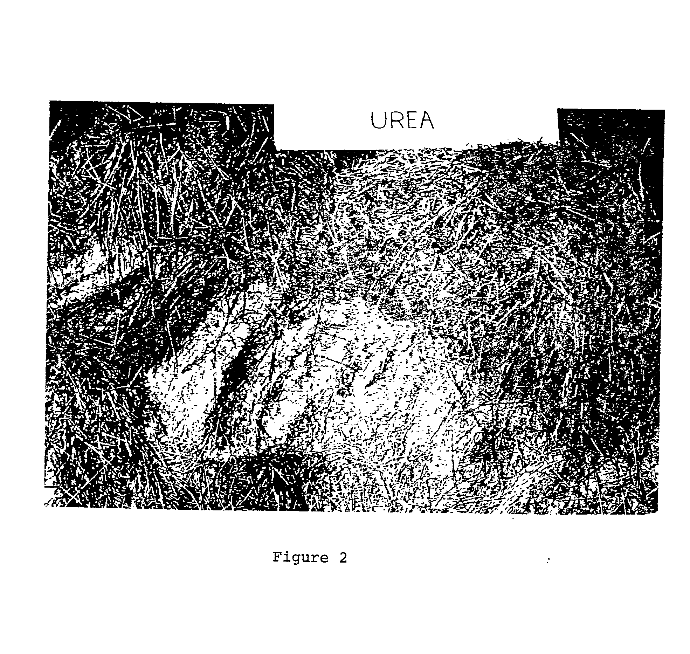

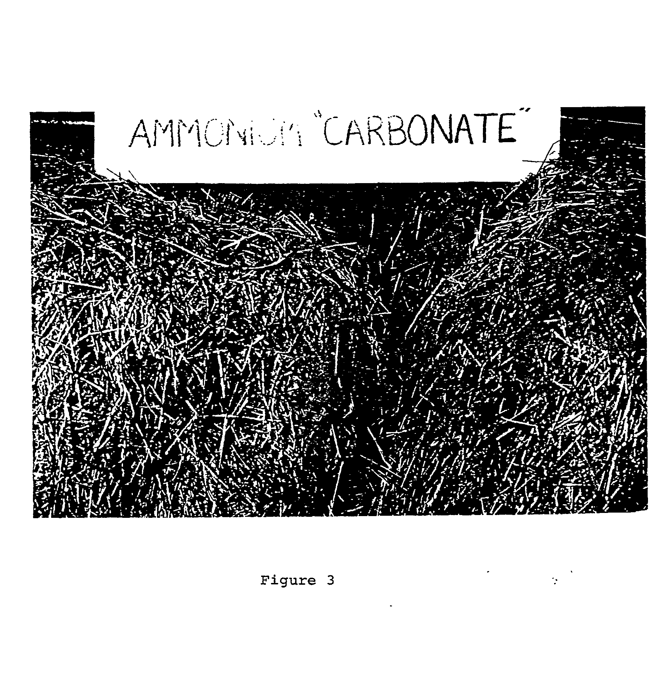

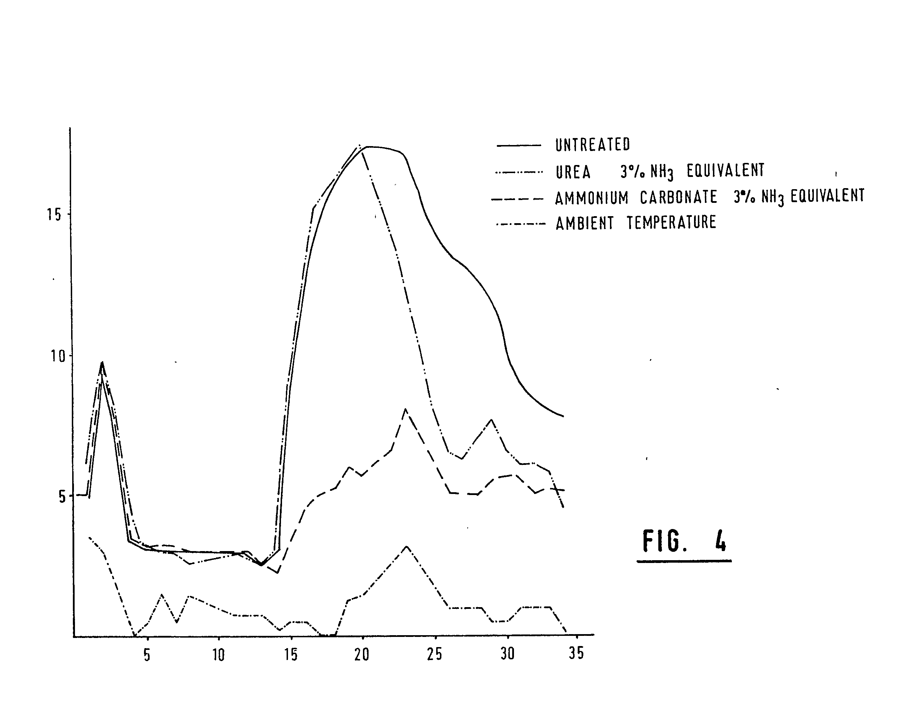

Figures 1 to 3 show hay stacks which have been stored for a period of time. Figure 1 shows an untreated hay stack, Figure 2 a stack which has been treated with urea (3% ammonia equivalent) and Figure 3 a stack which has been treated with ammonium "carbonate" (3% ammonia equivalent). All the stacks have been left under aerobic conditions for the same length of time (Figure 4). As is clearly shown in the Figures, the stacks of Figures 1 and 2 have been subject to extensive microbial activity and there are large areas of mould and fungal growth. By contrast, the stack of Figure 3 appears to have been substantially unaffected by moulds and fungi.

The extent of microbial activity is indicated by a rise in temperature in the stack. Figure 4 is a temperature chart showing the effectiveness of ammonium "carbonate" in the stacks as determined by the temperature measurements. Figures 5 and 6 present similar charts for 7 Kg packages of moist hay. In each case temperature measurements were taken in hay formed from perennial ryegrass on samples of untreated hay as well as hay treated with urea and with ammonium "carbonate". In all studies the amount of urea and ammonium "carbonate" used was such as to be equivalent to 3% ammonia.

Referring to Figures 1 to 4, perennial ryegrass (Melle) with a moisture content of 35% was stored in 30 bale stacks. There was an initial period of 14 days anaerobic storage and then the stacks were subject to aerobic storage. A very marked contrast between the temperature of the ammonium "carbonate" treated stack and those of the other stacks within the period 14 to 34 days is shown in Figure 4. When allowance is made for the variation in ambient temperature the temperature rise in the ammonium "carbonate" treated stack is very small compared with that in the other stacks.

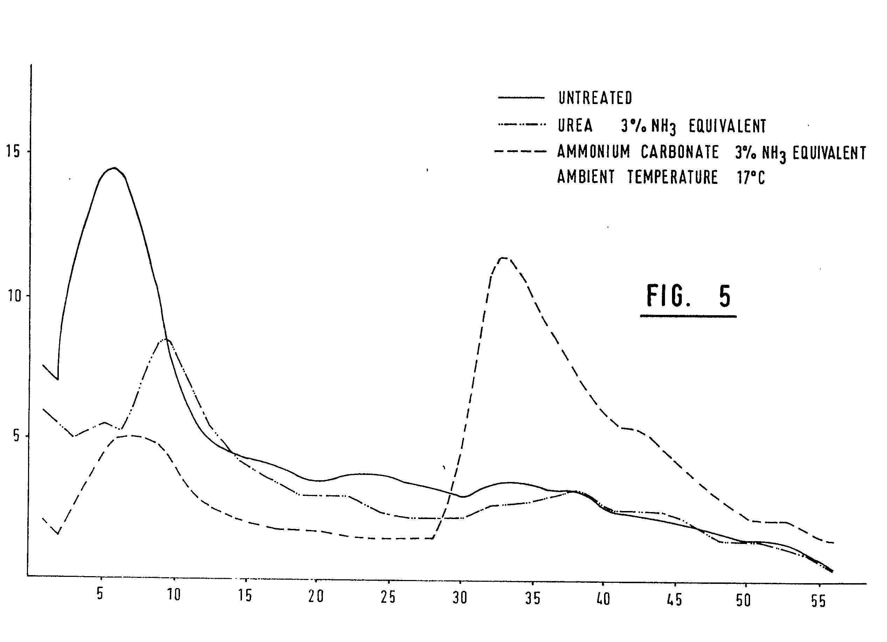

Referring to Figure 5, perennial ryegrass (Cropper) with a moisture content of 40% was formed into 7 Kg packages. These were stored under aerobic conditions at an ambient temperature of 17°C. The charts show that the initial temperature rise was least for the packages treated with ammonium "carbonate", and the temperature rise occurring in these packages after about 30 days indicates the delay of any significant microbial activity at an earlier stage.

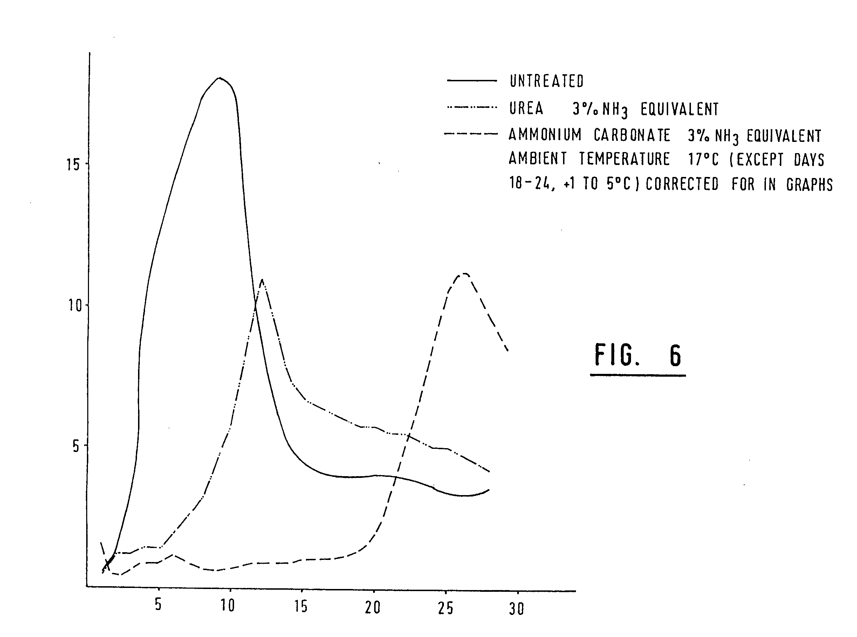

Referring to Figure 6, perennial ryegrass (Cropper) with a moisture content of 40% was again stored in 7 Kg packages. For an initial period of 60 days the packages were stored under anaerobic conditions. They were then subject to aerobic storage. The ambient temperature was 17°C except for days 18 to 24 when the temperature was from 1—5°C, this being allowed for in the graphs. Figure 6 illustrates the delay in microbial activity for the ammonium "carbonate" treated packages as compared with the untreated packages and those treated with urea.

## Claims

1. A process for treating moist lignocellulosic crop material with ammonia released from an ammonium salt which is unstable or volatile at ambient temperature, characterised in that the said salt is maintained in proximity with said material at ambient temperature, whereby said salt limits and controls microbial activity within said crop when gradually releasing ammonia.

2. A process according to claim 1, characterised in that the treated crop is stored within or under an impermeable layer, so that liberated gaseous ammonia can migrate through and be maintained in contact with the stored crop.

3. A process according to claim 1 or 2, characterised in that the ammonium salt is produced by reaction of ammonia and carbon dioxide, with or without water.

4. A process according to claim 3, characterised in that the ammonium salt is ammonium carbonate, ammonium bicarbonate, ammonium carbamate, or a mixture of two or more thereof.

5. A process according to claim 4, characterised in that the ammonium salt comprises a mixture of ammonium bicarbonate and ammonium carbamate, and is formed from a mixture containing 56% carbon dioxide and 32% ammonia, by weight, the remainder being water.

6. A process according to any one of the preceding claims, in which the crop is a nitrogen-deficient crop or feed, such as maize silage, ensiled grass straws, cereal straws, whole crop small grain cereals, grain, or other starchy or fibrous feed intended for ruminant feeding, and characterised in that the ammonium salt or mixture is added at a rate of 0.5 to 1.5 per cent ammonia equivalent by weight of dry matter, applied at or just prior to ensilage or at feeding.

7. A process according to any one of claims 1 to 5, for limiting and controlling microbial activity during the anaerobic or aerobic storage of crops of straw, hay, whole crop cereal or grain containing up to about 40% moisture, characterised in that the ammonium salt or mixture is added at a minimum rate of about 2% ammonia-equivalent, by weight of plant dry matter, applied at or just prior to storage.

8. A process according to any one of claims 1 to 5 for upgrading mature graminaceous crops containing 60% dry matter or more, characterised in that ammonium carbamate is applied at a rate of about 3.5% ammonia-equivalent.

## Patentansprüche

1. Verfahren zur Behandlung von feuchtem lignozellulosehaltigem Fruchtgut mit Ammoniak, das aus einem bei Umgebungstemperatur instabilen oder flüchtigen Ammoniumsalz freigesetzt wird, dadurch gekennzeichnet, daß das Salz in der Nähe des Guts auf Umgebungstemperatur gehalten wird, wodurch das Salz unter allmählicher Freisetzung von Ammoniak die mikrobielle Aktivität in der Frucht begrenzt und steuert.

2. Verfahren nach Anspruch 1, dadurch gekennzeichnet, daß die behandelte Frucht in oder unter einer undurchlässigen Schicht gelagert wird, so daß freigesetztes gasförmiges Ammoniak durch die gelagerte Frucht wandern und in Kontakt mit ihr gehalten werden kann.

3. Verfahren nach Anspruch 1 oder 2, dadurch gekennzeichnet, daß das Ammoniumsalz durch Umsetzen von Ammoniak und Kohlendioxid mit oder ohne Wasser erzeugt wird.

4. Verfahren nach Anspruch 3, dadurch gekennzeichnet, daß das Ammoniumsalz Ammoniumcarbonat, Ammoniumbicarbonat, Ammoniumcarbamat oder ein Gemisch von zwei oder mehr derselben ist.

5. Verfahren nach Anspruch 4, dadurch gekennzeichnet, daß das Ammoniumsalz ein Gemisch aus Ammoniumbicarbonat und Ammoniumcarbamat umfaßt und aus einem Gemisch gebildet ist, das 56 Gew.-% Kohlendioxid und 32 Gew.-% Ammoniak, Rest Wasser, enthält.

6. Verfahren nach einem der vorhergehenden Ansprüche, wobei die Frucht eine stickstoffarme Frucht oder ein stickstoffarmes Futter wie z.B Maissilage, siliertes Grasstroh, Getreidestroh, Vollfrucht-Kleinkorngetreide, Korn oder anderes stärkehaltiges oder faseriges zum Füttern von Wiederkäuern vorgesehenes Futter ist, dadurch gekennzeichnet, daß das Ammoniumsalz oder -gemisch in einer Menge von 0,5—1,5% Ammoniak-Äquivalent bezogen auf das Trockensubstanzgewicht entweder bei oder unmittelbar vor der Silierung oder beim Füttern zugesetzt wird.

7. Verfahren nach einem der Ansprüche 1 bis 5 zum Begrenzen und Steuern mikrobieller Aktivität während der anaeroben oder aeroben Lagerung von geerntetem Stroh, Heu, Vollfruchtgetreide oder Korn, enthältend bis zu ca. 40% Feuchtigkeit, dadurch gekennzeichnet, daß das Ammoniumsalz oder -gemisch in einer Mindestmenge von ca. 2% Ammoniak-Äquivalent bezogen auf das Pflanzentrockensubstanzgewicht entweder bei oder unmittelbar vor der Lagerung zugesetzt wird.

8. Verfahren nach einem der Ansprüche 1 bis 5 ru Qualitätsverbesserung von reifer graminhaltiger Frucht, die 60% oder mehr Trockensubstanz enthält, dadurch gekennzeichnet, daß Ammoniumcarbamat in einer Menge von ca. 3,5% Ammoniak-Äquivalent zugesetzt wird.

**Revendications**

1. Procédé de traitement d'une matière constituée d'une récolte lignocellulosique humide, avec de l'ammoniac dégagé par un sel d'ammonium qui est instable ou volatil à la température ambiante, caractérisé en ce que ledit sel est maintenu à proximité de ladite matière à la température ambiante, en limitant et en maîtrisant ainsi l'activité microbienne au sein de ladite récolte par un dégagement graduel d'ammoniac.

2. Procédé suivant la revendication 1, caractérisé en ce que la récolte traitée est stockée en dedans ou en dessous d'une couche imperméable, en sorte que l'ammoniac gazeux libéré peut migrer à travers la récolte stockée et être maintenu au contact de cette récolte.

3. Procédé suivant la revendication 1 ou 2, caractérisé en ce que le sel d'ammonium est produit par réaction d'ammoniac et d'anhydride carbonique, avec ou sans eau.

4. Procédé suivant la revendication 3, caractérisé en ce que le sel d'ammonium est le carbonate d'ammonium, le bicarbonate d'ammonium, le carbamate d'ammonium ou un mélange de deux ou plus de deux de ces sels.

5. Procédé suivant la revendication 4, caractérisé en ce que le sel d'ammonium comprend un mélange de bicarbonate d'ammonium et de carbamate d'ammonium et est formé à partir d'un mélange contenant 56% d'anhydride carbonique et 32% d'ammoniac, en poids, le reste étant de l'eau.

6. Procédé suivant l'une quelconque des revendications précédentes, dans lequel la matière est une récolte ou un fourrage déficient en azote, tel qu'un ensilage de maïs, des chaumes ensilés de graminées, des pailles de céréales, des récoltes entières de céréales à petits grains, de la graine ou d'autres aliments amylacés ou fibreux destinés à l'alimentation des ruminants, et caractérisé en ce que le sel d'ammonium ou le mélange est ajouté en proportion de 0,5 à 1,5 pour cent d'équivalent d'ammoniac par rapport au poids de matière sèche, appliqué au moment de l'ensilage ou juste avant, ou au moment de l'absorption de nourriture.

7. Procédé suivant l'une quelconque des revendications 1 à 5, pour limiter et maîtriser l'activité microbienne pendant le stockage anaérobie ou aérobie de récoltes de pailles, de foins, de céréales entières ou de graine contenant jusqu'à environ 40% d'humidité, caractérisé en ce que le sel d'ammonium ou le mélange est ajouté en proportion minimale d'environ 2% d'équivalents d'ammoniac, par rapport au poids de la matière végétale sèche, l'application étant effectuée au moment du stockage ou juste avant.

8. Procédé suivant l'une quelconque des revendications 1 à 5, pour l'amélioration de récoltes de graminées à maturité contenant 60% ou plus de 60% de matière sèche, caractérisé en ce que du carbamate d'ammonium est appliqué en proportion d'environ 3,5% d'équivalents d'ammoniac.

EP 0 215 578 B1

Figure 1

Figure 2

Figure 3

3

FIG. 4

UNTREATED
UREA     3% NH₃ EQUIVALENT
AMMONIUM CARBONATE  3% NH₃ EQUIVALENT
AMBIENT TEMPERATURE

FIG. 5

UNTREATED
UREA    3% NH$_3$ EQUIVALENT
AMMONIUM CARBONATE   3% NH$_3$ EQUIVALENT
AMBIENT TEMPERATURE  17°C

UNTREATED

UREA    3% NH₃  EQUIVALENT

AMMONIUM CARBONATE  3% NH₃ EQUIVALENT

AMBIENT TEMPERATURE  17°C (EXCEPT DAYS 18-24, +1 TO 5°C) CORRECTED FOR IN GRAPHS

FIG. 6